# EUROPEAN PATENT APPLICATION

(11) **EP 4 671 598 A1**
(43) Date of publication of application: **31.12.2025**
(21) Application number: 24927668.4
(22) Date of filing: 11.06.2024
(51) Int. Cl.: F16N 7/38

(54) **HYDRAULIC SYSTEM AND AUTOMOBILE**

(30) Priority: 24.04.2024 CN 202420869501 U
(71) Applicant: Chery Automobile Co., Ltd., Wuhu, Anhui 241006 (CN)
(72) Inventor: ZHANG, Hengxian, Wuhu, Anhui 241006 (CN); ZHOU, Zhiguang, Wuhu, Anhui 241006 (CN); LI, Shuangluan, Wuhu, Anhui 241006 (CN); YAO, Wangfei, Wuhu, Anhui 241006 (CN); ZHOU, Ying, Wuhu, Anhui 241006 (CN)
(74) Representative: Yang, Shu
(86) International application number: PCT/CN2024/098509
(87) International publication number: WO 2025/222599

(57) **Abstract**

The present disclosure relates to the technical field of vehicle lubrication and cooling, and in particular, to a hydraulic system and a vehicle. The hydraulic system includes a generator, a drive motor, an electric pump, a first oil supply assembly, a mechanical pump, and a second oil supply assembly. The first oil supply assembly communicates with a first rotor through a first pressure valve and communicates with a second rotor through a second pressure valve. An output end of the second oil supply assembly communicates with an output end of the first oil supply assembly through a third pressure valve, and the one-way communication refers to communication from the output end of the second oil supply assembly to the output end of the first oil supply assembly.

## Description

The present disclosure claims priority to Chinese Patent Application No. 202420869501.2, filed on April 24, 2024, and entitled "HYDRAULIC SYSTEM AND VEHICLE", the content of which is incorporated herein by reference in its entirety.

### TECHNICAL FIELD

The present disclosure relates to the technical field of vehicle lubrication and cooling, and in particular, to a hydraulic system and a vehicle.

### BACKGROUND

A vehicle is a means of transportation that helps users travel through the coordinated operation of a plurality of components.

The vehicle includes a drive motor, a generator, and an oil pump. The drive motor and the generator operate to generate heat, and the oil pump supplies oil to the drive motor and the generator for lubrication and cooling.

In the related art, to maintain the normal operation of the generator and the drive motor, the energy consumption of the oil pump is generally large, which is prone to overheating, resulting in limited power.

### SUMMARY

The present disclosure provides a hydraulic system and a vehicle, including the following technical solutions:
In a first aspect of the present disclosure, a hydraulic system is provided. The hydraulic system includes a generator, a drive motor, an electric pump, a first oil supply assembly, a mechanical pump, and a second oil supply assembly. The generator includes a first rotor and a first stator. The drive motor includes a second rotor and a second stator. The electric pump is configured to convey oil to the first rotor, the second rotor, and the second stator through the first oil supply assembly. The first oil supply assembly communicates with the first rotor through a first pressure valve and communicates with the second rotor through a second pressure valve. The mechanical pump is configured to convey oil to the first rotor, the second rotor, the second stator, the first stator, and an output end of the first oil supply assembly through the second oil supply assembly. An output end of the second oil supply assembly is in one-way communication with the output end of the first oil supply assembly through a third pressure valve, wherein the one-way communication refers to communication from the output end of the second oil supply assembly to the output end of the first oil supply assembly.

In some embodiments, the first oil supply assembly includes a bypass valve and an oil cooler, wherein the bypass valve communicates the output end of the first oil supply assembly with the electric pump; and the oil cooler communicates the output end of the first oil supply assembly with the electric pump.

In some embodiments, the first oil supply assembly further includes a first check valve and a second check valve, wherein the first check valve communicates the electric pump with the bypass valve, and communicates the electric pump with the oil cooler; and the second check valve communicates the bypass valve with the oil cooler.

In some embodiments, the second oil supply assembly includes a fourth pressure valve and a regulating valve, wherein the fourth pressure valve communicates the mechanical pump with the first stator, and the fourth pressure valve is configured to allow the mechanical pump to convey oil to the first stator or prevent the mechanical pump from conveying oil to the first stator; and the regulating valve communicates the mechanical pump with the fourth pressure valve to control an opening degree of the fourth pressure valve.

In some embodiments, the hydraulic system includes a clutch, and the second oil supply assembly further includes a switching valve, the switching valve communicating the mechanical pump with the clutch.

In some embodiments, the hydraulic system includes a clutch, and both the first oil supply assembly and the second oil supply assembly communicate with the clutch.

In some embodiments, the hydraulic system includes a pressure relief valve, wherein the pressure relief valve is disposed between the third pressure valve and the second oil supply assembly, and communicates with the third pressure valve and the output end of the second oil supply assembly.

In some embodiments, in the case that the electric pump and the mechanical pump operate simultaneously, an oil pressure at the output end of the first oil supply assembly is less than an oil pressure at the output end of the second oil supply assembly.

In some embodiments, the hydraulic system includes a controller, wherein the controller is in signal connection with the electric pump and the mechanical pump; and
the controller is configured to control a flow rate of oil output by the electric pump and a flow rate of oil output by the mechanical pump, such that the oil pressure at the output end of the first oil supply assembly is less than the oil pressure at the output end of the second oil supply assembly.

In some embodiments, the controller is in signal connection with the first pressure valve, and is configured to control an opening degree of the first pressure valve, such that a ratio of an oil flow rate of the first stator to an oil flow rate of the first rotor is greater than or equal to 4:1; and/or
the controller is in signal connection with the second pressure valve, and is configured to control an opening degree of the second pressure valve, such that a ratio of an oil flow rate of the second stator to an oil flow rate of the second rotor is greater than or equal to 4:1.

In a second aspect of the present disclosure, a vehicle is provided. The vehicle includes the hydraulic system as described in the above embodiments.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic structural diagram of a hydraulic system according to some embodiments of the present disclosure;
FIG. 2 is a schematic diagram of a first operating condition of a hydraulic system according to some embodiments of the present disclosure;
FIG. 3 is a schematic diagram of a second operating condition of a hydraulic system according to some embodiments of the present disclosure;
FIG. 4 is a schematic diagram of a third operating condition of a hydraulic system according to some embodiments of the present disclosure; and
FIG. 5 is a schematic diagram of a control architecture of a controller according to some embodiments of the present disclosure.

The reference numerals in the drawings are respectively denoted as:
1. generator; 11. first rotor; 12. first stator;
2. drive motor; 21. second rotor; 22. second stator;
3. electric pump;
4. first oil supply assembly; 41. first pressure valve; 42. second pressure valve; 43. bypass valve; 44. oil cooler; 45. first check valve; 46. second check valve;
5. mechanical pump;
6. second oil supply assembly; 61. third pressure valve; 62. fourth pressure valve; 63. regulating valve; 64. switching valve;
7. clutch;
8. pressure relief valve;
9. shaft gear;
10. controller.

The above accompanying drawings have shown the explicit embodiments of the present disclosure, which will be described in detail hereinafter. These accompanying drawings and text descriptions are not intended to limit the scope of the conception of the present disclosure in any way, but to illustrate the concept of the present disclosure to those skilled in the art with reference to specific embodiments.

### DETAILED DESCRIPTION

The technical solutions in embodiments of the present disclosure will be clearly and completely described hereinafter with reference to the accompanying drawings in the embodiments of the present disclosure, and it is apparent that the described embodiments are only a portion, but not all of the embodiments of the present disclosure. All other embodiments obtained by those of ordinary skill in the art without creative efforts with respect to the embodiments in the present disclosure shall fall within the protection scope of the present disclosure.

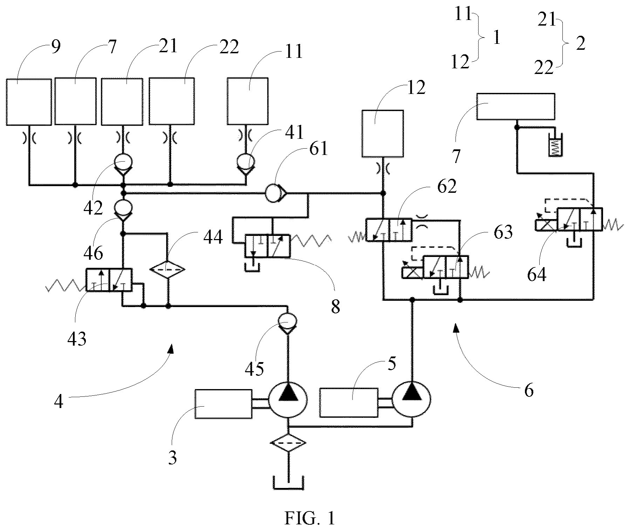

Orientation terms, such as "upper," "lower," and "side," used in the embodiments of the present disclosure are generally based on the relative relationship between orientations shown in FIG. 1, and these orientation terms are merely used to describe the relationship between structures more clearly, rather than to describe absolute orientations. In the case that the product is placed in different postures, the orientation may change, for example, "upper" and "lower" may be interchanged.

Unless otherwise defined, all technical terms used in the embodiments of the present disclosure have the same meaning as commonly understood by those of ordinary skill in the art.

For clearer descriptions of the technical solutions and advantages of the present disclosure, the embodiments of the present disclosure are further described in detail hereinafter with reference to the accompanying drawings.

In a first aspect of the present disclosure, a hydraulic system is provided. As shown in FIG. 1, the hydraulic system includes a generator 1, a drive motor 2, an electric pump 3, a first oil supply assembly 4, a mechanical pump 5, and a second oil supply assembly 6. The generator 1 includes a first rotor 11 and a first stator 12. The drive motor 2 includes a second rotor 21 and a second stator 22. The electric pump 3 is configured to convey oil to the first rotor 11, the second rotor 21, and the second stator 22 through the first oil supply assembly 4. The first oil supply assembly 4 communicates with the first rotor 11 through a first pressure valve 41, and communicates with the second rotor 21 through a second pressure valve 42. The mechanical pump 5 is configured to convey oil to the first rotor 11, the second rotor 21, the second stator 22, the first stator 12, and the output end of the first oil supply assembly 4 through the second oil supply assembly 6. The output end of the second oil supply assembly 6 is in one-way communication with the output end of the first oil supply assembly 4 through a third pressure valve 61. The one-way communication refers to the communication from the output end of the second oil supply assembly 6 to the output end of the first oil supply assembly 4. In some embodiments, the third pressure valve 61 limits the flow direction of the oil flowing through the third pressure valve 61, such that the oil only flows from the second oil supply assembly 6 to the first oil supply assembly 4, and does not flow in a reverse direction.

It should be understood that the mechanical pump 5 and the electric pump 3 can lubricate and cool the first rotor 11, the second rotor 21, and the second stator 22 by conveying oil to these components. The mechanical pump 5 can lubricate and cool the first stator 12 by conveying oil to the first stator 12 through the second oil supply assembly 6.

Since the oil supplied to the first stator 12 is separately conveyed by the electric pump 3 through the second oil supply assembly 6, the independence of lubrication and cooling of the first stator 12 can be improved, thereby improving the rationality of oil distribution of the hydraulic system of the present disclosure.

The first oil supply assembly 4 communicates with the first rotor 11 through the first pressure valve 41, and communicates with the second rotor 21 through the second pressure valve 42. By controlling the opening degrees of the first pressure valve 41 and the second pressure valve 42, the amount of oil conveyed to the first rotor 11 and the second rotor 21 can be reasonably adjusted, so as to prevent excessive oil from being conveyed to the first rotor 11 and the second rotor 21, thereby reducing the waste of oil.

The output end of the second oil supply assembly 6 is in one-way communication with the output end of the first oil supply assembly 4 through the third pressure valve 61, which facilitates the conveying of oil to the first rotor 11, the second rotor 21, and the second stator 22 by the mechanical pump 5 through the second oil supply assembly 6, improves the oil supply sealing performance of the second oil supply assembly 6, and facilitates the conveying of the drive oil to these components by the user through the mechanical pump 5 based on actual needs, thereby improving the rationality of oil distribution.

In the related art, due to the limitation of the space in the vehicle, the oil pump typically relies on a single port to lubricate a plurality of components simultaneously. Since the operating conditions of these components are different, the port cannot meet the lubrication requirements of all components. Consequently, some components may easily fail due to insufficient lubrication. In addition, maintaining the lubrication of a plurality of components also leads to high energy consumption of the oil pump, and the high energy consumption generates more heat, which in turn easily leads to the limited power of the oil pump.

In the embodiments of the present disclosure, in one aspect, oil is conveyed to the first rotor 11, the second rotor 21, and the second stator 22 by the electric pump 3 to meet the lubrication requirements of the first rotor 11, the second rotor 21, and the second stator 22, and maintain the normal operation of the first rotor 11, the second rotor 21, and the second stator 22. In another aspect, considering that the operating time of the generator 1 is short and the operating temperature of the first stator 12 is low, the mechanical pump 5 is used to lubricate and cool the first stator separately through the second oil supply assembly 6, such that the lubrication and cooling of the first stator 12 are separated from the first rotor 11, the second rotor 21, and the second stator 22. The first stator 12 is directionally lubricated and cooled based on actual requirements, which preliminarily reduces the amount of oil conveyed to the first stator 12 and reduces the waste of oil.

Further, in the hydraulic system provided by the embodiments of the present disclosure, the output end of the first oil supply assembly 4 and the output end of the second oil supply assembly also communicate with the first rotor 11 through the first pressure valve 41, and communicate with the second rotor 21 through the second pressure valve 42. In one aspect, in the case that the oil pressure generated by the operation of the electric pump 3 is low, the oil conveyed to the first rotor 11 and the second rotor 21 is reduced, such that the amount of oil conveyed to the second stator 22 is increased, and the lubrication efficiency and cooling efficiency for the second stator 22 are improved. In another aspect, it is also beneficial to provide enough oil with sufficient pressure to the first rotor 11 and the second rotor 21, thereby improving the lubrication and cooling effect for the first rotor 11 and the second rotor 21.

It should be understood that in the embodiments of the present disclosure, both the first oil supply assembly 4 and the second oil supply assembly 6 include oil supply pipelines, and various components in the hydraulic system directly communicate with each other, or communicate with each other through the oil supply pipelines.

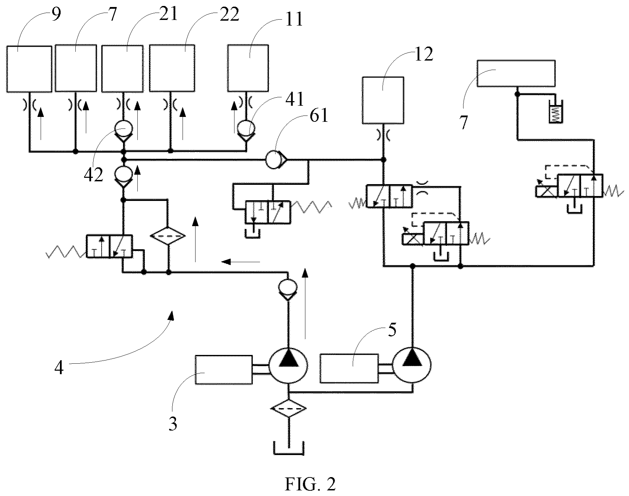

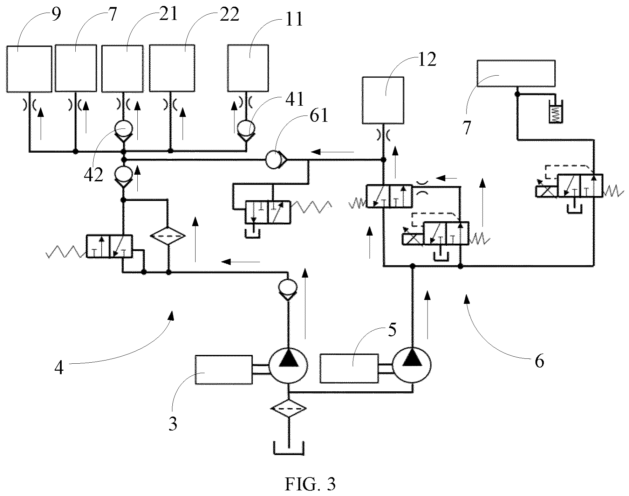

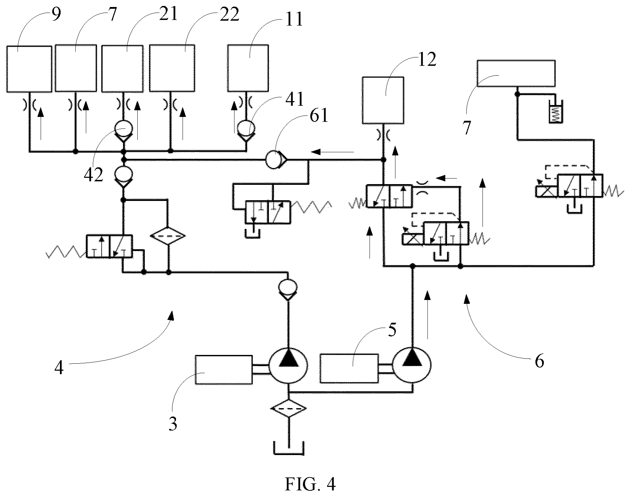

As shown in FIGS. 2 to 4, in the embodiments of the present disclosure, the hydraulic system is provided with three operating conditions, which specifically include:
1. The operating condition is as shown in FIG. 2. The electric pump 3 operates, and the mechanical pump 5 does not operate. The electric pump 3 conveys oil to the first rotor 11, the second rotor 21, and the second stator 22 through the first oil supply assembly 4. The opening degrees of the first pressure valve 41 and the second pressure valve 42 are controlled based on the actual requirements of components for lubrication and cooling. The third pressure valve 61 blocks the oil driven by the electric pump 3 from being conveyed to the second oil supply assembly 6.
2. The operating condition is as shown in FIG. 3. Both the electric pump 3 and the mechanical pump 5 operate. The electric pump 3 conveys oil to the first rotor 11, the second rotor 21, and the second stator 22 through the first oil supply assembly 4. The mechanical pump 5 conveys oil to the first stator 12 through the second oil supply assembly 6, and may also convey oil to the first rotor 11, the second rotor 21, and the second stator 22 through the third pressure valve 61 via the first oil supply assembly 4 simultaneously. The opening degrees of the first pressure valve 41, the second pressure valve 42, and the third pressure valve 61 are controlled based on the actual requirements of components for lubrication and cooling. For example, in the case that the amount of oil conveyed by the electric pump 3 is sufficient to meet the lubrication and cooling requirements of the first rotor 11, the second rotor 21, and the second stator 22, the third pressure valve 61 may be closed, that is, the opening degree of the third pressure valve 61 is controlled to be zero, such that the mechanical pump 5 only conveys oil to the first stator 12 through the second oil supply assembly 6.
3. The operating condition is as shown in FIG. 4. The mechanical pump 5 operates, and the electric pump 3 does not operate. The mechanical pump 5 conveys oil to the first stator 12 through the second oil supply assembly 6, and conveys oil to the first rotor 11, the second rotor 21, and the second stator 22 through the third pressure valve 61 via the first oil supply assembly 4 simultaneously.

In some embodiments of the present disclosure, the first pressure valve 41 is a check valve. The check valve can not only limit the flow direction of a flowing liquid, but also limit the flow rate of the flowing liquid. Exemplarily, the check valve is specifically a one-way throttle valve.

In some embodiments of the present disclosure, the second pressure valve 42 is a check valve. The check valve can not only limit the flow direction of a flowing liquid, but also limit the flow rate of the flowing liquid. Exemplarily, the check valve is specifically a one-way throttle valve.

In some embodiments of the present disclosure, the third pressure valve 61 is a check valve. The check valve can not only limit the flow direction of a flowing liquid, but also limit the flow rate of the flowing liquid. Exemplarily, the check valve is specifically a one-way throttle valve.

In some embodiments of the present disclosure, as shown in FIG. 1, the hydraulic system further includes a shaft gear 9 and a clutch 7. The electric pump 3 also conveys oil to the shaft gear 9 and the clutch 7 through the first oil supply assembly 4 to lubricate and cool the shaft gear 9 and the clutch 7.

In some embodiments of the present disclosure, the hydraulic system further includes a structure for recovering and cooling oil (not shown in the figures). The structure communicates with the electric pump 3 and the mechanical pump 5, respectively, cools the oil that has completed lubrication and cooling, and conveys the oil after cooling to the mechanical pump 5 and the electric pump 3, respectively.

In some embodiments of the present disclosure, as shown in FIG. 1, the first oil supply assembly 4 includes a bypass valve 43 and an oil cooler 44. The output end of the first oil supply assembly 4 communicates with the electric pump 3 through the bypass valve 43, and the output end of the first oil supply assembly 4 also communicates with the electric pump 3 through the oil cooler 44. In some embodiments, the bypass valve 43 is provided with two ports: an inlet and an outlet (not shown in the figures). The electric pump 3 communicates with the inlet of the bypass valve 43, and the output end of the first oil supply assembly 4 communicates with the outlet of the bypass valve 43. The oil cooler 44 is also provided with two ports: an inlet and an outlet (not shown in the figures). The electric pump 3 communicates with the inlet of the oil cooler 44, and the output end of the first oil supply assembly 4 communicates with the outlet of the oil cooler 44. Therefore, the bypass valve 43 and the oil cooler 44 are connected in parallel in the hydraulic system.

It should be understood that the bypass valve 43 can maintain the oil supply to the first rotor 11, the second rotor 21, and the second stator 22, such that the lubrication and cooling effects on the first rotor 11, the second rotor 21, and the second stator 22 can be maintained. The oil cooler 44 can reduce the temperature of the oil passing through the bypass valve 43 to improve the cooling effect of the oil on the first rotor 11, the second rotor 21, and the second stator 22. Through the function of the bypass valve 43 and the oil cooler 44, the first oil supply assembly 4 can achieve better lubrication and cooling effects on the first rotor 11, the second rotor 21, and the second stator 22.

In some embodiments of the present disclosure, as shown in FIG. 1, the first oil supply assembly 4 further includes a first check valve 45 and a second check valve 46. The first check valve 45 communicates the electric pump 3 with the bypass valve 43, and communicates the electric pump 3 with the oil cooler 44. The second check valve 46 communicates the bypass valve 43 with the oil cooler 44.

In some embodiments, the first check valve 45 is provided with two ports: an inlet and an outlet (not shown in the figures). The inlet of the first check valve 45 communicates with the electric pump 3, and the outlet of the first check valve 45 communicates with the inlet of the bypass valve 43 and the inlet of the oil cooler 44, respectively. The second check valve 46 is provided with two ports: an inlet and an outlet (not shown in the figures). The inlet of the second check valve 46 communicates with the outlet of the bypass valve 43 and the outlet of the oil cooler 44, respectively, and the outlet of the second check valve 46 communicates with the output end of the first oil supply assembly 4.

It should be understood that the first check valve 45 can prevent oil from flowing back into the electric pump 3 in the case that the oil cooler 44 and the bypass valve 43 are blocked, which can reduce the impact on the electric pump 3. The second check valve 46 can block the oil driven by the second oil supply assembly 6 from flowing back into the bypass valve 43 and the oil cooler 44, which is beneficial to improving the operational independence between the first oil supply assembly 4 and the second oil supply assembly 6.

In some embodiments of the present disclosure, as shown in FIG. 1, the second oil supply assembly 6 includes a fourth pressure valve 62 and a regulating valve 63. The fourth pressure valve 62 and the regulating valve 63 communicate with the mechanical pump 5. The fourth pressure valve 62 is configured to convey oil to the first stator 12, and the regulating valve 63 communicates with the fourth pressure valve 62 to control the opening degree of the fourth pressure valve 62.

In the hydraulic system provided by the embodiments of the present disclosure, the mechanical pump 5 conveys oil to the first stator 12 through the fourth pressure valve 62, such that the first stator 12 is lubricated and cooled. The fourth pressure valve 62 and the regulating valve 63 are arranged in parallel and cooperate to achieve the real-time control of the oil pressure in the second oil supply assembly 6. In some embodiments, the regulating valve 63 has a control effect on the fourth pressure valve 62, and the oil amount of the second oil supply assembly 6 is adjusted by adjusting the opening degree of the fourth pressure valve 62. In some embodiments, the regulating valve 63 and the fourth pressure valve 62 are independent of each other. In the case that the opening degree of the regulating valve 63 changes, the oil amount of the oil passage where the regulating valve 63 is located changes, thereby causing the oil amount of the oil passage where the fourth pressure valve 62 is located to change, thereby adjusting the oil amount supplied by the second oil supply assembly 6 to the first stator 12. In this way, this helps the amount of oil conveyed by the second oil supply assembly 6 to the first stator 12 adapt to the operating condition of the first stator 12, thereby reducing waste and energy consumption caused by lubricating and cooling the first stator 12 in other cases.

In some embodiments of the present disclosure, as shown in FIG. 1, the hydraulic system includes a clutch 7, the second oil supply assembly 6 further includes a switching valve 64, and the switching valve 64 communicates the mechanical pump 5 with the clutch 7. In some embodiments, the clutch 7 and the clutch 7 communicating with the first oil supply assembly 4 described above are the same clutch or different clutches.

It should be understood that the clutch 7 is typically configured to achieve the transmission and interruption of power, which generates a large amount of heat during operation. By communicating the mechanical pump 5 and the clutch 7 through the switching valve 64, the mechanical pump 5 can convey oil with sufficient pressure and flow rate to the clutch 7, such that the clutch 7 can be lubricated and cooled.

In the embodiments of the present disclosure, the switching valve 64 is a two-position three-way proportional valve.

In the embodiments of the present disclosure, the hydraulic system further includes an accumulator (not shown in the figures). The accumulator is disposed between the clutch 7 and the switching valve 64, and communicates with the switching valve 64. The accumulator can stabilize the oil pressure fluctuation of the clutch 7 and reduce the impact on the clutch 7.

In some embodiments of the present disclosure, as shown in FIG. 1, the hydraulic system includes a clutch 7, and both the first oil supply assembly 4 and the second oil supply assembly 6 communicate with the clutch 7.

It should be understood that by communicating the first oil supply assembly 4 and the second oil supply assembly 6 with the clutch 7, the hydraulic system provided by the present disclosure can increase the oil supply amount to the clutch 7, which is beneficial to improving the operating condition of the clutch 7.

In some embodiments of the present disclosure, as shown in FIG. 1, the hydraulic system includes a pressure relief valve 8. The pressure relief valve 8 is disposed between the third pressure valve 61 and the second oil supply assembly 6, and communicates with the third pressure valve 61 and the output end of the second oil supply assembly 6, respectively.

It should be understood that the pressure relief valve 8 can mitigate the situation where the oil pressure generated by the second oil supply assembly 6 is too high to push the third pressure valve 61 open, which is beneficial to guiding the excess oil generated by the second oil supply assembly 6 to other places, thereby facilitating the distribution of oil based on actual needs and reducing the impact on the first oil supply assembly 4.

In some embodiments of the present disclosure, in the case that the electric pump 3 and the mechanical pump 5 operate simultaneously, the oil pressure at the output end of the first oil supply assembly 4 is always less than the oil pressure at the output end of the second oil supply assembly 6. In this way, it is beneficial not only to reduce the amount of oil conveyed to the first stator 12, but also to lubricate and cool the drive motor 2 and the generator 1 simultaneously based on actual needs, thereby reducing energy consumption and ensuring that the components can maintain normal operation.

In addition, the oil pressure at the output end of the first oil supply assembly 4 is less than the oil pressure at the output end of the second oil supply assembly 6, which is also beneficial to conveying the oil with pressure generated by the mechanical pump 5 to the first rotor 11, the second rotor 21, and the second stator 22 through the third pressure valve 61, thereby improving the lubrication and cooling effects on the first rotor 11, the second rotor 21, and the second stator 22.

In some embodiments of the present disclosure, the effect that the oil pressure at the output end of the first oil supply assembly 4 is less than the oil pressure at the output end of the second oil supply assembly 6 is achieved by selecting the electric pump 3 and the mechanical pump 5 with different rated flow rates.

Exemplarily, in the case that the electric pump 3 and the mechanical pump 9 used in the hydraulic system are selected, an electric pump with a relatively small rated flow rate and a mechanical pump with a relatively large rated flow rate may be selected. Therefore, in the case that the hydraulic system operates, both the electric pump and the mechanical pump are in the rated operating condition, the flow rate of oil that can be provided by the electric pump is naturally less than the flow rate of oil that can be provided by the mechanical pump, and the oil pressure at the output end of the first oil supply assembly 4 is naturally less than the oil pressure at the output end of the second oil supply assembly 6.

In some other embodiments of the present disclosure, the flow rate of oil output by the electric pump and the flow rate of oil output by the mechanical pump are controlled by a control device, such that the oil pressure at the output end of the first oil supply assembly 4 is less than the oil pressure at the output end of the second oil supply assembly 6.

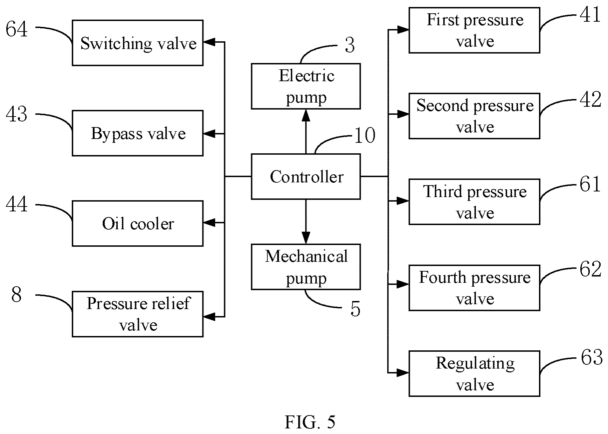

Exemplarily, as shown in FIG. 5, the hydraulic system further includes a controller 10. The controller 10 is in signal connection with the electric pump 3 and the mechanical pump 5, respectively, thereby controlling the operation of the electric pump 3 and the signal pump 5. In some embodiments, the controller 10 is configured to control the flow rate of oil output by the electric pump 3 and the flow rate of oil output by the mechanical pump 5, respectively, such that the oil pressure at the output end of the first oil supply assembly 4 is always less than the oil pressure at the output end of the second oil supply assembly 6.

In some embodiments of the present disclosure, the controller 10 is also in signal connection with the first pressure valve 41, and is configured to control the opening degree of the first pressure valve 41, such that the ratio of the oil flow rate of the second stator 22 to the oil flow rate of the second rotor 21 is greater than or equal to 4:1.

It should be understood that the second stator 22 and the second rotor 21 serve as operating components of the drive motor 2, and both have long operating times. The second stator 22 is lubricated with a large oil flow rate, which is beneficial to maintaining the relatively stable operating state thereof. Meanwhile, the second rotor 21 has a small oil flow rate, which is beneficial to improving the rationality of oil distribution.

In the embodiments of the present disclosure, the oil flow rate of the second stator 22 refers to the oil flow rate received by the second stator 22 in the case that the second stator 22 and the second rotor 21 are lubricated simultaneously.

In the embodiments of the present disclosure, the oil flow rate of the second rotor 21 refers to the oil flow rate received by the second rotor 21 in the case that the second stator 22 and the second rotor 21 are lubricated simultaneously.

In some embodiments of the present disclosure, the controller 10 is also in signal connection with the second pressure valve 42, and is configured to control the opening degree of the second pressure valve 42, such that the ratio of the oil flow rate of the first stator 12 to the oil flow rate of the first rotor 11 is greater than or equal to 4:1.

It should be understood that the first stator 12 and the first rotor 11 serve as operating components of the generator 1, and both have short operating times. The first stator 12 is lubricated with a large oil flow rate, which is beneficial to maintaining the relatively stable operating state thereof. Meanwhile, the first rotor 11 has a small oil flow rate, which is beneficial to improving the rationality of oil distribution.

In the embodiments of the present disclosure, the oil flow rate of the first stator 22 refers to the oil flow rate received by the first stator 22 in the case that the first stator 22 and the first rotor 21 are lubricated simultaneously.

In the embodiments of the present disclosure, the oil flow rate of the first rotor 21 refers to the oil flow rate received by the first rotor 21 in the case that the first stator 22 and the first rotor 21 are lubricated simultaneously.

In some embodiments of the present disclosure, as shown in FIG. 5, the controller 10 is also in signal connection with at least one of the first pressure valve 41, the second pressure valve 42, the third pressure valve 61, the fourth pressure valve 62, the regulating valve 63, the switching valve 64, the bypass valve 43, or the pressure relief valve 8, thereby controlling the opening degree of the corresponding valve.

The automatic control of the opening degree of each valve is achieved through the controller 10. This enables the hydraulic system to have high flexibility and precise control capability, accurately determine the requirement and supply of oil at each component during the operation of the hydraulic system, and meet the requirement and supply in time.

In some other embodiments of the present disclosure, as shown in FIG. 5, the opening degree of at least one of the first pressure valve 41, the second pressure valve 42, the third pressure valve 61, the fourth pressure valve 62, the regulating valve 63, the switching valve 64, the bypass valve 43, or the pressure relief valve 8 is manually controlled, thereby achieving flexible adjustment based on actual requirements and reducing system costs.

With continued reference to FIG. 5, in the embodiments of the present disclosure, the controller 10 is also in signal connection with the oil cooler 44, thereby controlling the startup and shutdown of the oil cooler 44 and controlling the cooling temperature of the oil cooler 44. Alternatively, the oil cooler 44 is manually controlled. Therefore, excessive use of the oil cooler 44 in a scenario where there is no cooling requirement is avoided, reducing system energy consumption.

In a second aspect of the present disclosure, a vehicle is provided. The vehicle includes the hydraulic system as described in the above embodiments.

It should be understood that since the hydraulic system according to the above embodiments is adopted, the vehicle according to the present disclosure has the same technical effect as the above hydraulic system, which will not be repeated herein.

In the embodiments of the present disclosure, the vehicle is a hybrid electric vehicle.

In some embodiments of the present disclosure, the vehicle includes a clutch 7 and an engine. The second oil supply assembly 6 conveys oil to the clutch 7, and the engine is in transmission connection to the mechanical pump 5. The vehicle is provided with the following five modes, specifically including:

### 1. A pure electric mode.

The electric pump 3 operates, and the mechanical pump 5 does not operate. The electric pump 3 conveys oil to the first rotor 11, the second rotor 21, the second stator 22, and the clutch 7 through the first oil supply assembly 4. The third pressure valve 61 blocks the oil driven by the electric pump 3 from being conveyed to the second oil supply assembly 6.

### 2. A series mode.

The electric pump 3 and the mechanical pump 5 operate. The electric pump 3 conveys oil to the first rotor 11, the second rotor 21, the second stator 22, and the clutch 7 through the first oil supply assembly 4. The mechanical pump 5 conveys oil to the first stator 12 through the second oil supply assembly 6, and conveys oil to the first rotor 11, the second rotor 21, the second stator 22, and the clutch 7 through the third pressure valve 61 via the first oil supply assembly 4.

### 3. A parallel mode.

The electric pump 3 and the mechanical pump 5 operate. The electric pump 3 conveys oil to the first rotor 11, the second rotor 21, the second stator 22, and the clutch 7 through the first oil supply assembly 4. The mechanical pump 5 conveys oil to the first stator 12 through the second oil supply assembly 6, conveys oil to the first rotor 11, the second rotor 21, the second stator 22, and the clutch 7 through the third pressure valve 61 via the first oil supply assembly 4, and also conveys oil to the clutch 7 through the second oil supply assembly 6.

### 4. An engine direct-drive mode.

The mechanical pump 5 operates, and the electric pump 3 does not operate. The mechanical pump 5 conveys oil to the first stator 12 through the second oil supply assembly 6. Meanwhile, oil is conveyed to the first rotor 11, the second rotor 21, the second stator 22, and the clutch 7 through the third pressure valve 61 via the first oil supply assembly 4.

### 5. A reverse mode.

The electric pump 3 operates, and the mechanical pump 5 does not operate. The electric pump 3 conveys oil to the first rotor 11, the second rotor 21, the second stator 22, and the clutch 7 through the first oil supply assembly 4. The third pressure valve 61 blocks the oil driven by the electric pump 3 from flowing to the second oil supply assembly 6.

In the present disclosure, the terms "first" and "second" are merely used for descriptive purposes and should not be construed as indicating or implying the relative importance. The term "a plurality of" refers to two or more, unless otherwise explicitly defined.

Other embodiments of the present disclosure are apparent to those skilled in the art from consideration of the specification and practice of the present disclosure disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered exemplary.

It should be understood that the present disclosure is not limited to the precise arrangements that have been described above and shown in the accompanying drawings, and that various modifications and changes may be made without departing from the scope thereof. The scope of the present disclosure is limited only by the appended claims.

## Claims

1. A hydraulic system, comprising a generator (1), a drive motor (2), an electric pump (3), a first oil supply assembly (4), a mechanical pump (5), and a second oil supply assembly (6), wherein
the generator (1) comprises a first rotor (11) and a first stator (12);
the drive motor (2) comprises a second rotor (21) and a second stator (22);
the electric pump (3) is configured to convey oil to the first rotor (11), the second rotor (21), and the second stator (22) through the first oil supply assembly (4);
the first oil supply assembly (4) communicates with the first rotor (11) through a first pressure valve (41) and communicates with the second rotor (21) through a second pressure valve (42);
the mechanical pump (5) is configured to convey oil to the first rotor (11), the second rotor (21), the second stator (22), the first stator (12), and an output end of the first oil supply assembly (4) through the second oil supply assembly (6); and
an output end of the second oil supply assembly (6) is in one-way communication with the output end of the first oil supply assembly (4) through a third pressure valve (61), wherein the one-way communication refers to communication from the output end of the second oil supply assembly (6) to the output end of the first oil supply assembly (4).

2. The hydraulic system according to claim 1, wherein the first oil supply assembly (4) comprises a bypass valve (43) and an oil cooler (44), wherein
the bypass valve (43) communicates the output end of the first oil supply assembly (4) with the electric pump (3); and
the oil cooler (44) communicates the output end of the first oil supply assembly (4) with the electric pump (3).

3. The hydraulic system according to claim 2, wherein the first oil supply assembly (4) further comprises a first check valve (45) and a second check valve (46), wherein
the first check valve (45) communicates the electric pump (3) with the bypass valve (43), and communicates the electric pump (3) with the oil cooler (44); and
the second check valve (46) communicates the bypass valve (43) with the oil cooler (44).

4. The hydraulic system according to claim 1, wherein the second oil supply assembly (6) comprises a fourth pressure valve (62) and a regulating valve (63), wherein
the fourth pressure valve (62) communicates the mechanical pump (5) with the first stator (12), and the fourth pressure valve (62) is configured to allow the mechanical pump (5) to convey oil to the first stator (12) or prevent the mechanical pump from conveying oil to the first stator; and
the regulating valve (63) communicates the mechanical pump (5) with the fourth pressure valve (62) to control an opening degree of the fourth pressure valve (62).

5. The hydraulic system according to claim 1, wherein the hydraulic system comprises a clutch (7), and the second oil supply assembly (6) further comprises a switching valve (64), the switching valve (64) communicating the mechanical pump (5) with the clutch (7).

6. The hydraulic system according to claim 1, wherein the hydraulic system comprises a clutch (7), and both the first oil supply assembly (4) and the second oil supply assembly (6) communicate with the clutch (7).

7. The hydraulic system according to claim 1, comprising a pressure relief valve (8), wherein the pressure relief valve (8) is disposed between the third pressure valve (61) and the second oil supply assembly (6), and communicates with the third pressure valve (61) and the output end of the second oil supply assembly (6).

8. The hydraulic system according to claim 1, wherein in a case that the electric pump (3) and the mechanical pump (5) operate simultaneously, an oil pressure at the output end of the first oil supply assembly (4) is less than an oil pressure at the output end of the second oil supply assembly (6).

9. The hydraulic system according to claim 8, comprising a controller (10), wherein the controller (10) is in signal connection with the electric pump (3) and the mechanical pump (5); and
the controller (10) is configured to control a flow rate of oil output by the electric pump (3) and a flow rate of oil output by the mechanical pump (5), such that the oil pressure at the output end of the first oil supply assembly (4) is less than the oil pressure at the output end of the second oil supply assembly (6).

10. The hydraulic system according to claim 9, wherein the controller (10) is in signal connection with the first pressure valve (41), and is configured to control an opening degree of the first pressure valve (41), such that a ratio of an oil flow rate of the first stator (12) to an oil flow rate of the first rotor (11) is greater than or equal to 4:1.

11. The hydraulic system according to claim 9, wherein the controller (10) is in signal connection with the second pressure valve (42), and is configured to control an opening degree of the second pressure valve (42), such that a ratio of an oil flow rate of the second stator (22) to an oil flow rate of the second rotor (21) is greater than or equal to 4:1.

12. A vehicle, comprising the hydraulic system as defined in any one of claims 1 to 11.
